# FASCICULE DE BREVET EUROPEEN

(11) **EP 2 098 427 B1**
(45) Date de publication et mention de la délivrance du brevet: **02.01.2013**
(21) Numéro de dépôt: 09154152.4
(22) Date de dépôt: 02.03.2009
(51) Int. Cl.: B60T 8/48

(54) **Système de régulation du freinage pour le contrôle de stabilité et de trajectoire d'un véhicule automobile**
Bremsregelsystem zur Steuerung der Kraftfahrzeugstabilität und -bahn
Braking regulation system to control the stability and trajectory of an automotive vehicle

(30) Priorité: 03.03.2008 FR 0851363
(43) Date de publication de la demande: 09.09.2009
(73) Titulaire: Peugeot Citroën Automobiles S.A., 78140 Vélizy Villacoublay (FR)
(72) Inventeur: Zink, Eric, 92700 Colombes (FR); Blanc, Fabrice, 38080 L'Isle d'Abeau (FR)

(56) Documents cités:
- DE-A1- 4 213 205
- DE-A1- 4 213 740
- FR-A- 2 602 730
- FR-A- 2 623 764
- GB-A- 2 217 412
- US-A1- 2005 156 464

## Description

La présente invention concerne un système de régulation du freinage pour le contrôle de stabilité et de trajectoire d'un véhicule automobile. L'invention a notamment pour but de réduire le coût de fabrication d'un tel système de freinage permettant de contrôler la stabilité et la trajectoire du véhicule.

Un système de freinage classique, commandé par un conducteur du véhicule, comporte généralement les éléments suivants :
- un amplificateur d'effort de freinage destiné à amplifier l'effort exercé sur la pédale de frein par le conducteur,
- un maître-cylindre tandem, qui consiste en une pompe à piston utilisée pour transformer l'effort pédale en pression hydraulique ; à cet effet, le maître-cylindre tandem est en communication avec un réservoir de liquide de frein, et
- des étriers situés au niveau des roues, et destinés, dans le cas du freinage à disque, à transformer la pression hydraulique en effort pour presser les plaquettes de frein contre les disques, entraînant un ralentissement de la rotation du disque et donc de la roue par frottements.

En outre, un tel système de freinage comporte un circuit de freinage constitué d'un ensemble de canalisations hydrauliques destinées à relier les différents éléments du système de freinage et à permettre la circulation du liquide de frein sous pression.

Ces systèmes de freinage, bien qu'efficaces au niveau de l'arrêt des roues en lui-même, ne permettent pas de résoudre les problèmes de perte de contrôle, de stabilité et de trajectoire pouvant survenir lorsqu'un véhicule roule dans certaines conditions particulières, par exemple sur une chaussée endommagée ou glissante, ou à une vitesse trop élevée, ou lorsque le conducteur est amené à freiner ou changer de direction brusquement.

Différents systèmes de freinage ont donc été conçus par les constructeurs automobiles pour remédier à ces inconvénients.

Un premier type de système vise à éviter le blocage des roues lorsqu'un conducteur freine trop brusquement, afin de maintenir une bonne adhérence des roues sur la chaussée en toutes circonstances, ce qui permet de conserver la directivité du véhicule et d'optimiser les distances de freinage. Le principe de fonctionnement d'un tel système connu plus généralement sous le nom ABS (Anti lock Bracking System) est d'utiliser des électrovannes et des pompes hydrauliques pour diminuer la pression de freinage appliquée sur une roue, dés lors qu'un risque de blocage de cette roue est détecté. Le système comprend en outre un capteur de vitesse de rotation installé sur chaque roue, une unité de commande électronique et deux électrovannes par roue pour permettre ce contrôle de pression.

On connaît également des systèmes électroniques de contrôle de stabilité et de trajectoire du véhicule, plus généralement connus sous l'acronyme ESC pour "Electronic Stability Control ", dont l'objectif est d'appliquer de façon indépendante à chaque roue du véhicule un couple correcteur de freinage afin de contrôler la stabilité et la trajectoire du véhicule dans le cas d'une consigne de freinage du conducteur, inexistante, insuffisante ou au contraire trop importante, au regard du comportement dynamique du véhicule.

Afin de pouvoir procéder à cette augmentation ou génération de couple de freinage sans action du conducteur sur la pédale, il est nécessaire de disposer d'un dispositif de fourniture d'énergie, installé dans le système de freinage, et indépendant de tout effort du conducteur sur la pédale de frein. La mise en oeuvre d'un tel dispositif de fourniture d'énergie est commandée, le cas échéant, par une unité de contrôle électronique. Ce dispositif sera appelé deuxième système de gestion de freinage dans la suite de la description.

Ce système de freinage est muni d'une pompe hydraulique, permettant, en cas d'action insuffisante ou inexistante d'un conducteur sur la pédale, de faire circuler du liquide de frein sous pression vers un ou plusieurs étriers de frein, de manière à freiner une ou plusieurs roues du véhicule.

Généralement, un système de freinage muni d'un contrôle de stabilité et de trajectoire de type ESC, permet également la mise en oeuvre d'un système anti-blocage de roues, par exemple de type ABS, car les éléments utilisés pour générer ou augmenter la pression de freinage sur chaque roue peuvent être utilisés, à l'inverse, pour diminuer cette pression, et ainsi permettre le déblocage d'une roue.

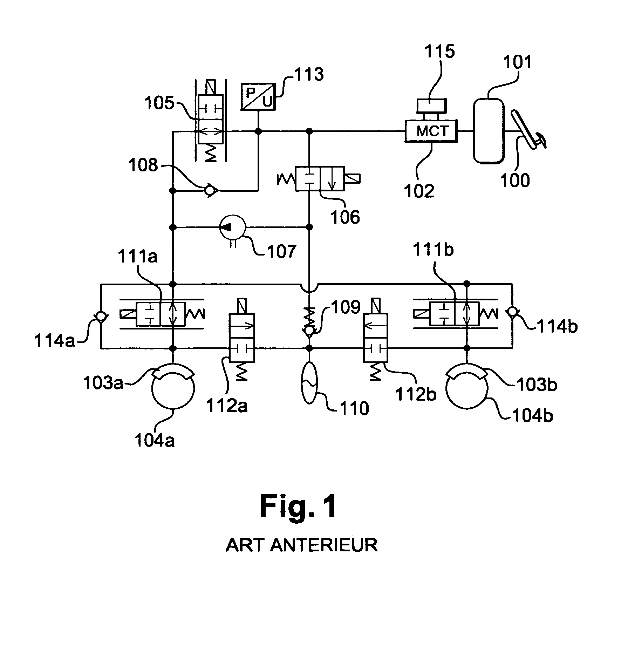

On a représenté sur la figure 1 les éléments essentiels pour le fonctionnement d'un système de freinage conforme à l'état de la technique du point de vue d'un seul des deux circuits de freinage, dans un véhicule automobile comportant une installation de freinage hydraulique à deux circuits de freinage, c'est-à-dire uniquement pour deux roues dont les freins sont reliés entre eux. En effet, les éléments essentiels pour le fonctionnement du système de freinage pour le deuxième circuit sont les mêmes.

Le système de freinage montré sur la figure 1 comprend les éléments suivants, formant un premier système de gestion du freinage ;
- une pédale de frein 100, destinée à transmettre et à amplifier l'effort exercé par le conducteur du véhicule lorsqu'il souhaite freiner,
- un amplificateur d'effort de freinage 101,
- un maître-cylindre tandem 102, relié à un réservoir 115 de liquide de frein, permettant de transformer l'effort amplifié par l'amplificateur 101 et la pédale en pression hydraulique, les deux circuits de freinage sont reliés à la sortie des deux chambres de pression du maître-cylindre tandem 102, et
- des étriers 103a et 103b associés à des disques de frein 104a et 104b pour transformer la pression hydraulique en couple de freinage de chacune des roues.

Il comprend en outre un ensemble d'éléments formant un deuxième système de gestion de freinage. Ces éléments, dont le fonctionnement sera décrit par la suite, sont les suivants :
- une électrovanne de pilotage 105, normalement ouverte,
- une électrovanne d'aspiration 106, normalement fermée,
- une pompe hydraulique 107,
- des clapets 108, 109, permettant de n'autoriser le passage du liquide de frein que dans un sens d'écoulement,
- un accumulateur basse pression 110, destiné à stocker du liquide pendant certaines phases de fonctionnement du système,
- au niveau de chaque étrier de frein, un circuit d'admission et/ou d'échappement, comportant deux électrovannes, l'une étant une électrovanne d'admission normalement ouverte (111a, 111b), et l'autre une électrovanne d'échappement normalement fermée (112a, 112b), ainsi qu'un clapet anti-retour (114a,114b),
- un capteur de pression 113, et
- un ensemble de canalisations hydrauliques, non référencées, permettant de transporter le liquide entre les différents éléments du système.

Ce système de freinage comporte également une unité de contrôle électronique qui n'est pas représentée sur la figure 1 et qui permet de piloter les systèmes de freinage et notamment de mettre en oeuvre les procédés d'ABS et d'ESC en procédant de la manière suivante :
- collecter et traiter les mesures issues des différents capteurs de position, de vitesse, accélération ou pression installées dans le véhicule,
- communiquer avec le système de contrôle de moteur,
- contrôler et commander, à partir de ces mesures, les différents éléments du deuxième système de freinage, par exemple, de manière à mettre en oeuvre un procédé anti-blocage de roues ou un procédé de contrôle de trajectoire et de stabilité du véhicule,

On précise ici que, dans l'ensemble de la description qui suit, les électrovannes mises en oeuvre pourront être des électrovannes tout ou rien, ou des électrovannes proportionnelles. Une électrovanne tout ou rien est caractérisée par deux états, un état de repos (qui peut être ouvert ou fermé), et un état d'activation (qui est l'état contraire).

Une électrovanne proportionnelle comporte une infinité d'états entre un état de repos et un état d'activation complète, ce qui permet de procéder à une ouverture et une fermeture progressives.

On entend par le terme "électrovanne normalement ouvert (ou fermé)", l'électrovanne dans son état de repos ouvert (ou fermé).

Il peut également s'agir d'électrovanne « débit », c'est-à-dire permettant de contrôler un débit, ou d'électrovanne « pression », c'est-à-dire permettant de contrôler la différence de pressions appliquée à cette électrovanne.

Lors d'un freinage classique, dans lequel il n'est pas fait appel au deuxième système de gestion de freinage, toutes les électrovannes sont désactivées, c'est-à-dire qu'elles se trouvent dans leur position normale, et le fonctionnement est alors le suivant :
- lorsque le conducteur appuie sur la pédale 100, ainsi que précédemment décrit, du liquide de frein sous pression est émis en sortie du maître-cylindre tandem 102,
- ce liquide traverse, d'une part, l'électrovanne de pilotage 105 ouverte, et d'autre part le clapet 108.
- le liquide est alors dirigé, via le réseau de canalisations hydrauliques, en direction des étriers 103a et 103b, via les électrovannes 111 a et 111 b,
- le liquide sous pression est ainsi introduit dans les étriers 103a et 103b, ce qui a pour conséquence le freinage de chacune des roues.

Lors d'un défreinage classique, c'est à dire lorsque le conducteur réduit ou cesse d'exercer un effort sur la pédale de frein 100, le liquide sous pression contenu dans les étriers 103a et 103b est redirigé vers le maître-cylindre tandem 102, via les électrovannes 111 a et 111 b et les clapets 114a et 114b ainsi que l'électrovanne 105.

Lorsqu'un risque de blocage d'une roue est détecté, par exemple de la roue équipée de l'étrier 103a, il convient de diminuer la pression dans cet étrier, afin de procéder au déblocage de cette roue. Un tel risque de blocage fait suite à une action de freinage trop importante par rapport aux conditions d'adhérence.

Pour effectuer cette diminution de pression, l'unité de contrôle électronique commande les électrovannes d'admission 111a, normalement ouverte, et d'échappement 112a, normalement fermée, afin qu'elles deviennent respectivement fermée et ouverte.

En conséquence, le liquide sous pression contenu dans l'étrier 103a, s'écoule, via l'électrovanne112a, jusqu'à l'accumulateur basse pression 110.

Cet accumulateur basse pression permet de stocker de façon temporaire le fluide évacué par les électrovannes d'échappement 112a et 112b des étriers 103a et 103b. Le clapet 109 installé entre l'accumulateur 110 et l'aspiration de la pompe 107, et autorisant l'écoulement du liquide de frein dans le sens accumulateur vers la pompe permet d'utiliser la pompe 107 pour vider l'accumulateur 110 et donc réduire la pression de l'accumulateur 110 en cas de besoin.

Dans le cas, au contraire, où le conducteur exerce un effort inexistant ou insuffisant sur la pédale de frein par rapport à la situation du véhicule, l'unité de contrôle électronique détecte que la pression maître-cylindre, mesurée par le capteur 113, est inférieure à la pression requise pour maintenir une bonne stabilité de ce véhicule. Dans ce cas, elle commande l'activation de l'électrovanne de pilotage 105, qui devient alors fermée, ce qui a pour effet d'isoler le maître-cylindre 102 du circuit de freinage. L'électrovanne d'aspiration 106, placée entre le maître-cylindre 102 et l'aspiration de la pompe hydraulique 107, est également activée et se retrouve alors dans l'état ouvert. La pompe 107 est ainsi reliée au maître-cylindre 102 et pourra prélever du fluide directement au niveau du maître-cylindre 102 ou de son réservoir 115.

L'unité de contrôle commande alors une activation de la pompe hydraulique 107, afin d'envoyer du liquide de frein sous pression en direction des électrovannes d'admission 111a et 111b, qui sont commandées en fonction de la (ou des) roue(s) sur laquelle (lesquelles) il est nécessaire d'appliquer une pression de freinage.

Ainsi comme on vient de le voir dans l'exemple sur la figure 1, les éléments formant le deuxième système de gestion du freinage font appel à de nombreux composants hydrauliques dont l'intégration dans un bloc hydraulique peut s'avérer compliquée et coûteuse. Ces inconvénients empêchent l'installation de ce type de système de manière généralisée sur les véhicules produits par les constructeurs automobile à l'heure actuelle.

Il est connu par ailleurs par le document GB2217412 un système de régulation du freinage pour un véhicule automobile, comprenant :
- au moins un circuit d'admission et d'échappement de liquide de frein relié à un élément de frein situé au niveau des roues ;
- un premier système de gestion du freinage, commandé par un conducteur du véhicule via un dispositif de cmmande installé dans l'habitacle du véhicule, et relié à un maître-cylindre muni d'un réservoir de liquide de frein,
- un deuxième système de gestion du freinage, commandé par une unité de contrôle électronique installée dans le véhicule,
- ce deuxième système de gestion du freinage comportant :
- une pompe hydraulique, comportant une entrée de liquide de frein reliée directement au réservoir de liquide de frein permettant de prélever du liquide de frein lors de son activation et une sortie de liquide de frein reliée au circuit d'admission et d'échappement,
- un ensemble d'électrovannes installées dans le circuit d'admission et d'échappement de liquide de frein et commandées par l'unité de contrôle électronique, destiné à l'activation de l'un et/ou l'autre système de gestion du freinage en fonction des paramètres reflétant le comportement dynamique du véhicule et une action du conducteur, et
- une liaison entre la sortie du circuit d'échappement et un accumulateur basse pression, permettant un stockage temporaire de liquide de frein dans l'accumulateur basse pression lors de l'activation du deuxième système de freinage.

Un système de régulation du freinage pour un véhicule automobile selon le préambule de la revendication 1 est connu du document DE 4213740 A1.

La présente invention vise donc à fournir un système de freinage permettant la mise en oeuvre d'un procédé de contrôle de stabilité et de trajectoire, qui soit moins coûteux et plus simple à installer tout en préservant l'efficacité du système pour remédier aux pertes de stabilité et de trajectoire pouvant survenir dans un véhicule.

Le concept principal de l'invention est de simplifier le bloc hydraulique du deuxième système de gestion du freinage, en partant de l'idée de supprimer ou remplacer certains composants hydrauliques par des éléments moins coûteux tout en remplissant la même fonction. Parmi les différents éléments compris dans les systèmes existants, les électrovannes qui sont au nombre total de 12 (6 par circuit) représentent une partie coûteuse du bloc hydraulique.

En conséquence, l'invention part de l'idée que la suppression d'une partie des électrovannes, en particulier les électrovannes d'aspiration permettrait de diminuer les coûts de ces systèmes, et ainsi de les installer en série sur de nombreux véhicules.

En outre, la pompe hydraulique est identifiée comme l'un des composants les plus coûteux, son utilisation lors des phases ABS impose une augmentation de la durée potentielle d'utilisation de la pompe. L'autre idée principale de l'invention est donc de fournir un système de freinage qui ne nécessite pas l'activation de la pompe lors de la phase ABS ou plus généralement de diminution de pression, permettant de réduire les exigences sur la pompe.

Le rôle de l'électrovanne d'aspiration qui est une électrovanne normalement fermé, placée entre le maître-cylindre et l'aspiration de la pompe hydraulique est de permettre lorsqu'elle est activée, par exemple dans un mode de gestion du freinage mettant en oeuvre un procédé ESC, à la pompe de prélever du fluide au niveau du maître-cylindre ou de son réservoir.

L'invention vise donc à fournir un système de freinage muni d'un système de contrôle de stabilité et de trajectoire, dans lequel le prélèvement du fluide est assuré directement par une liaison hydraulique moins coûteuse qu'une électrovanne.

A cet effet, l'invention concerne un système de régulation du freinage pour un véhicule automobile selon la revendication 1.

On précise tout d'abord que, dans la suite de la description, on désignera par "circuit de freinage" l'ensemble des canalisations hydrauliques permettant la circulation du liquide de frein des premier et deuxième systèmes de gestion de freinage vers le ou les circuits d'admission et d'échappement reliés aux différents éléments de freins.

Le dispositif de commande permettant au conducteur de commander le premier système de gestion de freinage est, par exemple, une pédale de frein, ou tout autre actionneur électrique ou mécanique installé dans le véhicule et permettant de transmettre une information de commande au système de freinage.

Comme on vient de définir l'invention ci-dessus, en vue de la simplification et de la réduction du coût de l'installation du système de freinage, on a supprimé l'électrovanne d'aspiration qui relie dans les systèmes de freinage existant le maître-cylindre à l'aspiration de la pompe. Elle est remplacée par une liaison hydraulique qui permet à la pompe de prélever du fluide au niveau du réservoir de liquide de frein lors de l'activation du deuxième système de gestion du freinage mettant en oeuvre, par exemple, un procédé ESC.

De préférence, dans cet accumulateur basse pression, le liquide est stocké sous une pression de l'ordre de 0 à 20 bars.

Avantageusement, cet accumulateur est dimensionné en terme de volume et de raideur de sorte qu'il permet de stocker tout le volume de liquide de frein à la sortie du circuit d'échappement lors des phases de réduction de pression.

En particulier, cette forme du système selon l'invention se distingue de l'état de la technique en ce qu'il ne met pas en oeuvre la pompe hydraulique lors des phases de réduction de la pression dans un ou plusieurs éléments de frein (par exemple, lors de la phase de déblocage des roues). Aussi, il est nécessaire d'utiliser un accumulateur basse pression de plus grande capacité, et donc de plus grande taille, que les accumulateurs utilisés dans les systèmes existants. Par conséquent cette forme de réalisation impose un contrôle du volume de liquide de frein transféré des étriers vers l'accumulateur.

Selon l'invention, le système de freinage comporte une électrovanne d'isolement normalement ouverte reliée d'une part au maître cylindre et d'autre part au circuit d'admission et d'échappement de manière à isoler le circuit de freinage du premier système de gestion du freinage du maître cylindre lors de la phase d'activation du deuxième système de gestion du freinage.

Cette électrovanne peut être interposée entre le maître cylindre et l'entrée du circuit d'admission, de sorte que lors du freinage ou du défreinage, le liquide de frein circule dans un même circuit hydraulique.

Dans une variante particulièrement avantageuse, cette électrovanne est interposée entre le maître cylindre et les clapets du circuit d'admission, permettant de former un circuit de défreinage distinct du circuit de freinage.

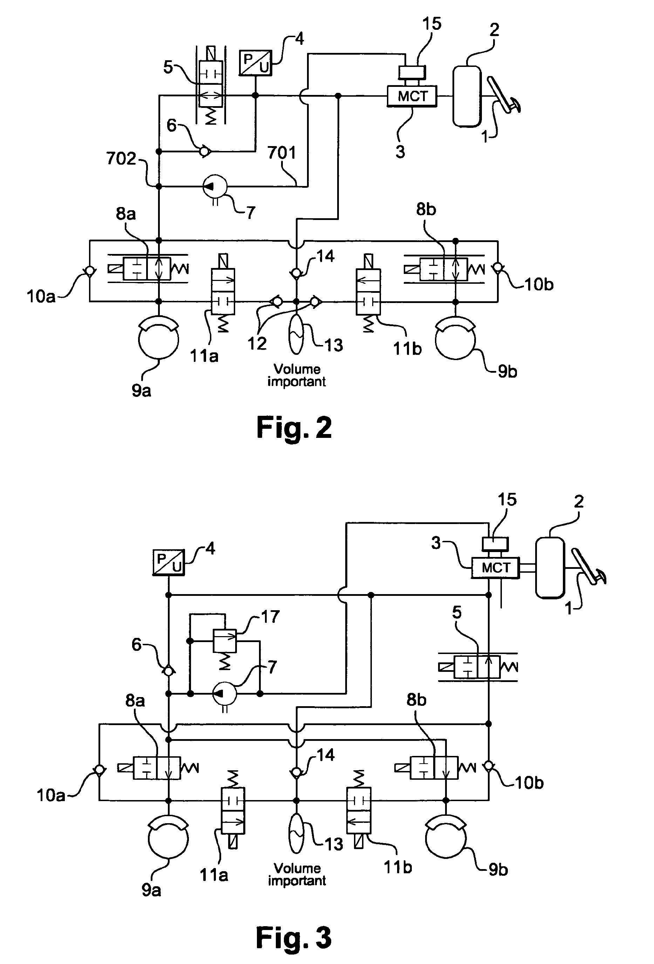

D'autres caractéristiques et avantages de l'invention seront apparents à la lecture de la description de certains de ses modes de réalisations particuliers, non limitatifs de l'invention en référence aux dessins qui les représentent:
en figure 1: un système de régulation du freinage de l'art antérieur ;
en figure 2: un système de régulation du freinage selon un mode de réalisation particulier de l'invention ne comportant pas d'électrovanne d'aspiration et un accumulateur basse pression ;
en figure 3: une variante du mode de réalisation de la figure 2

La figure 2 montre un système de régulation du freinage selon un premier mode de réalisation de l'invention.

Ce système comporte l'ensemble des éléments décrits ci-dessus, à savoir :
- deux circuits d'admission et d'échappement, reliés chacun à un élément de frein 9a, 9b installé sur une roue du véhicule, chaque circuit étant formé d'une électrovanne d'admission 8a, 8b, normalement ouverte, une électrovanne d'échappement 11a, 11b, normalement fermée, et des clapets anti-retour 10a, 10b montés en parallèle des électrovannes d'admission 8a, 8b,
- un premier système de gestion de freinage comportant un amplificateur d'effort de freinage 2 et un maître cylindre tandem 3 muni d'un réservoir de liquide de frein 15, commandé par un conducteur via une pédale 1,
- un deuxième système de gestion du freinage comportant une pompe 7 et un accumulateur basse pression 13 permettant de récupérer le liquide de frein évacué à la sortie du circuit d'échappement, et
- une électrovanne d'isolement normalement ouverte 5 reliée d'une part au maître cylindre 3 et d'autre part à l'entrée du circuit d'admission, son activation permettant d'isoler le circuit de freinage du maître cylindre 3 afin d'activer le deuxième système de freinage.
- et des clapets 6, 12 et 14

Dans ce système, les phases de freinage et de défreinage sont mises en oeuvre de manière similaire aux systèmes existants dans l'état de la technique.

Lorsque le conducteur appuie sur la pédale 1, l'amplificateur d'effort de freinage 2 augmente cet effort qui est transmis au maître cylindre 3. La pression générée par le maître cylindre 3 est transmise par le clapet 6 et l'électrovanne d'isolement normalement ouverte 5, puis par les électrovannes d'admission normalement ouvertes 8a, 8b aux étriers 9a, 9b installés respectivement sur les roues du véhicule.

Lorsque le conducteur réduit ou cesse d'exercer un effort sur la pédale 1 pour réaliser un défreinage, le liquide de frein contenu sous pression dans les étriers 9a, 9b retourne au maître cylindre 3 à travers les clapets 10a, 10b, les électrovannes normalement ouvertes 8a, 8b et l'électrovanne normalement ouvertes 5.

Le système montré sur la figure 2 permet, en outre, la mise en oeuvre de fonctionnalités anti-blocage, permettant de relâcher la pression sur un ou plusieurs étriers de frein lorsqu'un risque de blocage de roue est détecté par l'unité de contrôle électronique.

Ainsi, lorsqu'il est nécessaire de faire chuter par exemple la pression dans l'étrier 9a, l'électrovanne normalement ouverte d'admission 8a et l'électrovanne d'échappement normalement fermée 11a sont activées (l'activation peut ne pas être simultanée ni totale). Le liquide s'écoule via le clapet 12 jusqu'à l'accumulateur basse pression 13. La pression de cet accumulateur 13 peut être inférieure à la pression maître cylindre car le clapet 14 qui relie l'accumulateur au maître cylindre n'autorise l'écoulement que dans le sens de l'accumulateur vers le reste du circuit.

Les caractéristiques de l'accumulateur basse pression, par exemple son volume et/ou la raideur du ressort utilisé, sont choisies de façon à pouvoir stocker tout le volume de fluide qui sera évacué des étriers 9a, 9b par les électrovannes d'échappement 11a, 11b durant la phase de régulation, tout en ayant une élévation de pression relativement faible. L'accumulateur basse pression 13 est vidé par l'intermédiaire du clapet 14 lorsque, au cours du défreinage la pression maître cylindre 3 devient inférieure à la pression de l'accumulateur basse pression 13.

Le système de la figure 2 permet également de générer ou d'augmenter la pression de freinage appliquée sur un ou plusieurs étriers de freins, en l'absence d'action d'un conducteur sur la pédale 1 ou lorsque l'action exercée par le conducteur est insuffisante, mettant ainsi en oeuvre une fonctionnalité de contrôle de stabilité et de trajectoire, de type ESC, telle que décrite précédemment. En effet, lors d'un freinage classique, la pression permettant de freiner les roues est issue d'une force mécanique exercée par le conducteur. En l'absence de cette force, il est nécessaire de disposer d'une autre source d'énergie pour envoyer une pression en direction des étriers 9a, 9b.

Ainsi lorsque la pression à la sortie du maître cylindre mesurée par le capteur de pression 4 est inférieure à la pression requise, l'électrovanne d'isolement normalement ouverte 5 est activée et devient alors fermée. Le maître cylindre est ainsi isolé du circuit de freinage. La pompe 7 qui est reliée directement au réservoir de liquide de frein 15 par la liaison 701 prélève du fluide directement au niveau du réservoir Elle est ensuite activée pour générer une pression requise. Cette pression peut être modulée par l'électrovanne 5 ou par les électrovannes d'admission 8a, 8b ou bien encore par une commande spécifique de la pompe.

Si le conducteur appuie finalement sur la pédale de frein 1, la pression résultante de cette action peut être transmise aux étriers des roues 9a, 9b si elle est supérieure à la pression générée par la pompe 7 par l'intermédiaire du clapet 6.

Avantageusement, dans cette forme de réalisation de l'invention, l'électrovanne d'isolement normalement ouverte 5 peut aussi jouer le rôle de limiteur de pression et protéger ainsi le circuit hydraulique et la pompe des surpressions lorsque celle-ci est activée en même temps que les électrovannes d'admission 8a, 8b.

La figure 3 montre une variante du mode de réalisation décrit précédemment, dans laquelle l'électrovanne d'isolement normalement ouverte 5 est interposée entre le maître-cylindre 3 et les clapets 10a, 10b du circuit d'admission de sorte que le circuit de défreinage est distinct du circuit de freinage. Les clapets 10a, 10b sont reliés à l'électrovanne 5 sans liaison avec le clapet 6.

Dans cette forme de réalisation, lorsque le conducteur appuie sur la pédale 1, la pression est transmise à travers le clapet 6 et les électrovannes d'admission normalement ouverte 8a, 8b aux étriers, ces éléments constituant ainsi le circuit de freinage.

Lors de la phase de défreinage, le fluide contenu sous pression dans les étriers 9a, 9b retourne au maître cylindre à travers les clapets 10a, 10b et l'électrovanne normalement ouverte 5, ces éléments constituant ainsi le circuit de défreinage.

Le principe de fonctionnement d'un tel système selon ce mode de réalisation est similaire à celui précédemment décrit en ce qui concerne la phase de régulation du freinage pour contrôler la trajectoire ou la stabilité du véhicule mettant en oeuvre le procédé d'ESC ainsi que la phase d'anti-blocage des roues.

Dans cette variante, afin de protéger la pompe 7 et le circuit du freinage des surpressions lorsque la pompe 7 est activée en même temps que les électrovannes d'admissions 8a, 8b du circuit d'admission, le système peut également comporter un limiteur de pression 17 monté en parallèle par rapport à la pompe.

Ce limiteur de pression peut être remplacé par un programme permettant de commander la pompe de manière à éviter les surpressions dans le circuit de freinage, ou combiné avec ce programme de commande pour contrôler la surpression.

## Revendications

1. Système de régulation du freinage pour un véhicule automobile, comprenant :
- au moins un circuit d'admission et d'échappement de liquide de frein reliés à un élément de frein situé au niveau d'une roue (9a, 9b), ce circuit comportant une électrovanne d'admission (8a, 8b), normalement ouverte et une électrovanne d'échappement (11a, 11b), normalement fermée, commandées par une unité de contrôle électronique, et un clapet anti-retour (10a, 10b) monté en parallèle de l'électrovanne d'admission (8a, 8b) ;
- un premier système de gestion du freinage commandé par un conducteur du véhicule et comportant un amplificateur d'effort de freinage (2) et un maître cylindre tandem (3) muni d'un réservoir de liquide de frein (15), commandé par un conducteur du véhicule via un dispositif de commande installé dans l'habitacle du véhicule, et relié à un maître-cylindre (3),
- un deuxième système de gestion du freinage comportant une pompe (7) qui comporte une entrée de liquide de frein (701) reliée directement au réservoir de liquide de frein (15) permettant de prélever du liquide de frein lors de son activation et une sortie de liquide de frein (702) reliée au circuit d'admission et d'échappement, un accumulateur basse pression (13) et une liaison comprenant l'électrovanne d'échappement (11a, 11b) entre la sortie du circuit d'échappement et ledit accumulateur basse pression (13), permettant un stockage temporaire de liquide de frein évacué à la sortie du circuit d'échappement dans l'accumulateur basse pression lors de l'activation du deuxième système de freinage,
- l'unité de contrôle électronique installée dans le véhicule et destinée à l'activation du premier et/ou deuxième système de gestion du freinage en fonction des paramètres reflétant le comportement dynamique du véhicule et une action du conducteur, pour notamment à mettre en oeuvre les procédés d'ABS et d'ESC
- une électrovanne d'isolement normalement ouverte (5), interposée entre le maître cylindre (3) et le circuit d'admission et d'échappement ; son activation par l'unité de contrôle électronique permettant d'isoler le circuit de freinage du premier système de gestion du freinage du maître cylindre (3) afin d'activer le deuxième système de gestion du freinage,
**caractérisé en ce que** l'accumulateur basse pression (13) est relié directement au maître cylindre (3) via un clapet anti-retour (14) ouvrant vers le maître cylindre (3).

2. Système de régulation du freinage selon la revendication 1, **caractérisé en ce que** l'accumulateur basse pression (13) est dimensionné de sorte qu'il permet de stocker tout le volume du liquide de frein évacué des éléments de frein des roues (9a, 9b) via le circuit d'échappement lors de l'activation du deuxième système de freinage.

3. Système de régulation du freinage selon la revendication 1 ou 2, **caractérisé en ce que** l'électrovanne d'isolement normalement ouverte (5) est interposée entre le maître-cylindre (3) et l'entrée du circuit d'admission, de sorte que lors du freinage et du défreinage, le liquide de frein traverse un même circuit hydraulique du premier système de gestion de freinage.

4. Système de régulation du freinage selon la revendication 1 ou 2, **caractérisé en ce que** l'électrovanne d'isolement normalement ouverte (5) est interposée entre le maître-cylindre (3) et le clapet anti-retour (10a, 10b) monté en parallèle de l'électrovanne d'admission (8a, 8b) du circuit d'admission de manière à former un circuit de défreinage distinct du circuit de freinage formé par l'ensemble des canalisations hydrauliques permettant la circulation du liquide de frein des premier et deuxième systèmes de gestion de freinage vers le ou les circuits d'admission et d'échappement reliés aux différents éléments de freins.

5. Système de régulation du freinage selon la revendication 3 ou 4, **caractérisé en ce qu'**il comporte un limiteur de pression (17) monté en parallèle par rapport à la pompe permettant de protéger la pompe hydraulique (7) et le circuit de freinage des surpressions.

6. Système de régulation du freinage selon l'une des revendications 3 à 4, **caractérisé en ce qu'**il comporte un programme permettant de commander la pompe de manière à éviter les surpressions dans le circuit de freinage.

7. Véhicule comportant un système de régulation du freinage selon l'une des revendications 1 à 6.

## Claims

1. A braking regulation system for a motor vehicle, including:
- at least one brake fluid intake and exhaust circuit connected to a brake element situated at the level of a wheel (9a, 9b), this circuit comprising a normally open intake solenoid valve (8a, 8b) and a normally closed exhaust solenoid valve (11a, 11b), controlled by an electronic control unit, and a non-return valve (10a, 10b) mounted in parallel with respect to the intake solenoid valve (8a, 8b);
- a first braking management system controlled by a driver of the vehicle and comprising a braking force amplifier (2) and a tandem master cylinder (3) provided with a brake fluid reservoir (15), controlled by a driver of the vehicle via a control device installed in the passenger compartment of the vehicle, and connected to a master cylinder (3),
- a second braking management system comprising a pump (7) which comprises a brake fluid inlet (701) connected directly to the brake fluid reservoir (15) permitting brake fluid to be taken during its activation, and a brake fluid outlet (702) connected to the intake and exhaust circuit, a low pressure accumulator (13) and a connection, comprising the exhaust solenoid valve (11a, 11b), between the outlet of the exhaust circuit and the said low pressure accumulator (13), permitting a temporary storage of brake fluid evacuated at the outlet of the exhaust circuit in the low pressure accumulator during the activation of the second braking system,
- the electronic control unit installed in the vehicle and intended for the activation of the first and/or second braking management system as a function of the parameters reflecting the dynamic behaviour of the vehicle and an action of the driver, in particular to implement the ABS and ESC processes
- a normally open isolating solenoid valve (5), interposed between the master cylinder (3) and the intake and exhaust circuit; its activation by the electronic control unit permitting the isolation of the braking circuit of the first braking management system from the master cylinder (3) so as to activate the second braking management system,
**characterized in that** the low pressure accumulator (13) is connected directly to the master cylinder (3) via a non-return valve (14) opening towards the master cylinder (3).

2. The braking regulation system according to Claim 1, **characterized in that** the low pressure accumulator (13) is dimensioned such that it permits the storage of all the volume of the brake fluid evacuated from the brake elements of the wheels (9a, 9b) via the exhaust circuit during the activation of the second braking system.

3. The braking regulating system according to Claim 1 or 2, **characterized in that** the normally open isolating solenoid valve (5) is interposed between the master cylinder (3) and the inlet of the intake circuit, such that during braking and brake release, the brake fluid passes through a same hydraulic circuit of the first braking management system.

4. The braking regulation system according to Claim 1 or 2, **characterized in that** the normally open isolating solenoid valve (5) is interposed between the master cylinder (3) and the non-return valve (10a, 10b) mounted in parallel with respect to the intake solenoid valve (8a, 8b) of the intake circuit so as to form a brake release circuit which is distinct from the braking circuit formed by the set of hydraulic ducts permitting the circulation of the brake fluid of the first and second braking management systems towards the intake and exhaust circuit(s) connected to the different brake elements.

5. The braking regulation system according to Claim 3 or 4, **characterized in that** it comprises a pressure limiter (17) mounted in parallel with respect to the pump, permitting the hydraulic pump (7) and the braking circuit to be protected from overpressures.

6. The braking regulation system according to one of Claims 3 to 4, **characterized in that** it comprises a program permitting the pump to be controlled so as to prevent overpressures in the braking circuit.

7. A vehicle comprising a braking regulation system according to one of Claims 1 to 6.

## Patentansprüche

1. Bremsregelsystem für Kraftfahrzeug, aufweisend:
- mindestens einen Einlasskreislauf und Auslasskreislauf für Bremsflüssigkeit, die mit einem Bremselement verbunden sind, das sich auf dem Niveau eines Rads (9a, 9b) befindet, wobei dieser Kreislauf ein normalerweise offenes Einlassmagnetventil (8a, 8b) und ein normalerweise geschlossenes Auslassmagnetventil (11a, 11b) aufweist, die von einer elektronischen Steuereinheit gesteuert werden, und ein Rückschlagventil (10a, 10b), das parallel mit dem Einlassmagnetventil (8a, 8b) montiert ist,
- ein erstes Bremsverwaltungssystem, das von einem Fahrer des Fahrzeugs gesteuert wird und einen Bremskraftverstärker (2) und einen Tandem-Hauptzylinder (3) aufweist, der mit einem Bremsflüssigkeitsbehälter (15) versehen ist, gesteuert von einem Fahrer des Fahrzeugs über eine Steuervorrichtung, die in dem Innenraum des Fahrzeugs installiert und mit einem Hauptzylinder (3) verbunden ist,
- ein zweites Bremsverwaltungssystem, das eine Pumpe (7) aufweist, die einen Bremsflüssigkeitseingang (701) aufweist, der direkt mit dem Bremsflüssigkeitsbehälter (15) verbunden ist, die es erlaubt, Bremsflüssigkeit bei ihrer Betätigung zu entnehmen, und einen Bremsflüssigkeitsausgang (702), der mit dem Einlass- und Auslasskreislauf verbunden ist, einen Niederdruckspeicher (13) und eine Verbindung, die das Auslassmagnetventil (11a, 11b) aufweist, zwischen dem Ausgang des Auslasskreislaufs und dem Niederdruckspeicher (13), der ein vorübergehendes Lagern von Bremsflüssigkeit erlaubt, die an dem Ausgang des Auslasskreislaufs in den Niederdruckspeicher beim Betätigen des zweiten Bremssystems abgeleitet wird,
- die elektronische Steuereinheit, die in dem Fahrzeug installiert ist und zum Betätigen des ersten und/oder des zweiten Bremssystems in Abhängigkeit von den Parametern, die das dynamische Verhalten des Fahrzeugs widerspiegeln und eine Betätigung des Fahrers, um insbesondere die ABS- und ESC-Verfahren umzusetzen, bestimmt ist,
- ein normalerweise offenes Absperrmagnetventil (5), das zwischen den Hauptzylinder (3) und den Einlass- und Auslasskreislauf eingefügt ist, wobei sein Aktivieren durch die elektronische Steuereinheit das Absperren des Bremskreislaufs des ersten Bremsverwaltungssystems des Hauptzylinders (3) erlaubt, um das zweite Bremsverwaltungssystem zu aktivieren,
**dadurch gekennzeichnet, dass** der Niederdruckspeicher (13) direkt mit dem Hauptzylinder (3) über ein Rückschlagventil (14), das zu dem Hauptzylinder (3) öffnet, verbunden ist.

2. Bremsregelsystem nach Anspruch 1, **dadurch gekennzeichnet, dass** der Niederdruckspeicher (13) derart bemessen ist, dass er es erlaubt, das gesamte Volumen der Bremsflüssigkeit, das von den Bremselementen der Räder (9a, 9b) über den Auslasskreislauf beim Aktivieren des zweiten Bremssystems abgeleitet wird, zu speichern.

3. Bremsregelsystem nach Anspruch 1 oder 2, **dadurch gekennzeichnet, dass** das normalerweise offene Absperrmagnetventil (5), zwischen den Hauptzylinder (3) und den Eingang des Einlasskreislaufs derart eingefügt ist, dass die Bremsflüssigkeit beim Bremsen und Lösen der Bremse einen gleichen Hydraulikkreislauf des ersten Bremsverwaltungssystems durchquert.

4. Bremsregelsystem nach Anspruch 1 oder 2, **dadurch gekennzeichnet, dass** das normalerweise offene Absperrmagnetventil (5) zwischen den Hauptzylinder (3) und das Rückschlagventil (10a, 10b), das zu dem Einlassmagnetventil (8a, 8b) des Einlasskreislaufs parallel montiert ist, derart eingefügt ist, dass ein Bremslösekreislauf gebildet wird, der von dem Bremskreislauf getrennt ist, der von der Einheit der hydraulischen Kanalisationen gebildet wird, die die Zirkulation der Bremsflüssigkeit des ersten und zweiten Bremsverwaltungssystems zu dem oder den Einlass- und Auslasskreisläufen, die mit den verschiedenen Bremselementen verbunden sind, erlaubt.

5. Bremsregelsystem nach Anspruch 3 oder 4, **dadurch gekennzeichnet, dass** es einen Druckbegrenzer (17) aufweist, der parallel in Bezug zu der Pumpe installiert ist, der es erlaubt, die Hydraulikpumpe (7) und den Bremskreislauf vor Überdrücken zu schützen.

6. Bremsregelsystem nach einem der Ansprüche 3 bis 4, **dadurch gekennzeichnet, dass** es ein Programm aufweist, das es erlaubt, die Pumpe derart zu steuern, dass Überdrücke in dem Bremskreislauf vermieden werden.

7. Fahrzeug, das ein Bremsregelsystem nach einem der Ansprüche 1 bis 6 aufweist.
